# EUROPEAN PATENT SPECIFICATION

(11) **EP 0 759 501 B1**
(45) Date of publication and mention of the grant of the patent: **31.03.1999**
(21) Application number: 95108164.5
(22) Date of filing: 29.05.1995
(51) Int. Cl.: F01N 3/02, F01N 3/06, F01N 3/28, F01N 3/34, F01N 7/14

(54) **Exhaust temperature control**
Abgastemperatursteuerung
Contrôle de gaz d'échappement

(43) Date of publication of application: 26.02.1997
(73) Proprietor: Pfefferle, William C., Madison, Connecticut 06443 (US)
(72) Inventor: Pfefferle, William C., Madison, Connecticut 06443 (US)
(74) Representative: Boeters, Hans Dietrich, Dr.

(56) References cited:
- EP-A- 0 526 673
- WO-A-95/06193
- DE-A- 1 476 475
- DE-A- 2 401 204
- DE-B- 1 077 000
- NN-A- 526 673
- US-A- 2 947 600

## Description

This invention relates to an emissions control system including the features of the pre-characterizing portion of claim 1.

Exhaust emissions from small internal combustion engines such as are used, e.g., for lawn mowers and small generator sets, are a significant source of atmospheric pollution by hydrocarbons and carbon monoxide. Such engines typically operate fuel-rich and therefore are particularly dirty as compared to an automotive engine, even if the latter is operated without a catalytic converter. Although automotive emissions are now controlled by use of catalytic converters, such conventional devices are not considered feasible for small engine use because of inherently large size, high cost and system complexity relating to the need for air addition and limitation of the temperature of exhaust gases and exposed converter surfaces to safe values. The high emission levels of typical small engines means that destruction of those emissions by oxidation results in a greater evolution of heat with a consequent higher converter temperature than for typical automotive catalytic converters. Further, small engine systems typically are much more exposed to gasoline spills and to operator contact, creating a hazard even with temperatures comparable to those for automotive catalytic converters.

An emissions control system of the kind specified in the pre-characterizing clause of claim 1 is disclosed in WO 95/06193, this system including a circular reaction chamber partially filled with a catalytic substance, and passive air induction means in the form of an injection nozzle through which the exhaust from the engine is directed centrally into the reaction chamber. The oxidized exhaust gases leave the reaction chamber through an annular shroud of e.g. glass wool to provide sound muffling, cooling of the effluent and spark extinction. However, any such shroud alone cannot effectively reduce the temperature of the effluent as well as the surface temperature of the device whereas, due to the oxidization process, this temperature will considerably be increased as compared to the temperature of the untreated engine exhaust. EP 0 526 673 Al, on the other hand, discloses a vehicle muffler in which cooling air is admixed to the exhaust just prior to its leaving the muffler without any catalytic reaction having taken place.

This in mind, the present invention aims at improving an emissions controle system as specified in the pre-characterizing clause of claim 1 so that hazards due to the high temperature created in either the effluent of the system and the external surfaces thereof are minimized without the need of complex, space consuming and expensive means.

This aim is achieved, according to the invention, with an emissions control system as specified in claim 1. The dependent claims indicate adventageous additional design features thereof.

According to the invention, additional air is admixed to the gases leaving the reaction chamber by second passive air induction means thus to cool the effluent of the system to safe values whereas the reaction chamber can be operated at a temperature high enough to bring about substantially complete oxidation of the engine exhaust. In this admixing of air use is made of the high velocity pulses of the hot reaction chamber exhaust flow. Still, in spite of the high temperature existing in and at the exit of the reaction chamber, surface temperatures as well are maintained at a safe level and ignition of any fumes in the ambient air is reliably prevented all around the system. This allows use of engines with the emissions controle system of the present invention even in hazardous locations such as coal mines. Typically, in any such case the temperature of the effluent of the system is reduced to a value not higher than about 600 degrees Kelvin. Thus, the present invention makes possible economic achievement of ultra-low emission levels of carbon monoxide and hydrocarbon even with very small internal combustion engines and in hazardous locations.

The term "passive", as here applied to the system of the invention or its components, refers to such devices or components which do not require any moving parts. Thus, a conventional catalytic converter is a passive device whereas a converter system utilizing a mechanical air pump is not passive.

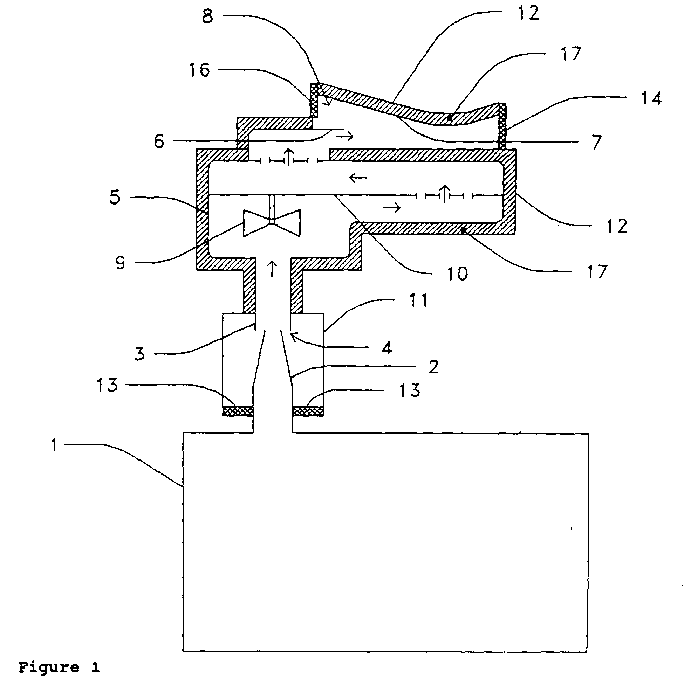

In the following a preferred embodiment of an emissions controle system according to the present invention is described in more detail taking reference to the accompanying drawing. The single figure thereof is a more or less diagrammatic longitudinal section of the respective emissions controle system attached to an internal combustion engine.

In the embodiment as shown the exhaust from a single cylinder gasoline engine 1 passes through an exhaust line 2, which serves as an air inductor nozzle, into a line 3, thereby entraining air from a shroud 11 through opening 4 in line 3. This air enters shroud 11 through a flame arrestor 13. The exhaust gas and the mixed in added air pass from line 3 into a reaction chamber and muffler 5 into contact with catalytic surfaces of swirler 9 resulting in virgorous recirculation and stable gas phase combustion. Contact of gases with the catalytic surfaces of baffle plate 10 aid flame stabilization. Hot combustion products exiting vessel 5 are directed by deflector 6 which serves as an air inductor nozzle, into the venturi duct formed by wall 7 thereby inducting air into duct 8 through flame arrestor screen 16 and mixing it with the hot exhaust. Gases exiting through the venturi duct formed by wall 7 are more than 200 degrees Celsius lower in temperature than the hot gases exiting reactor/muffler 5. Contact of entering gases with swirler 9 also serves to create a low pressure region near the muffler inlet and thus inhibit backflow of gases through the open end of line 3. Typically, muffler 5 is encased in insulation 17 to reduce the temperature of surfaces 12 to an acceptable level. Gases exit the venturi formed by wall 7 through flame arrestor 14 to contain any flame from ignition of fuel in air entering through arrestor 16.

In place of the insulation, a double walled heat shield may be used to enclose the muffler assembly to contain the reaction heat and minimize risk of burns or fire.

### EXAMPLE I

Fuel rich exhaust gas from a small Briggs and Stratton single cylinder gasoline powered spark ignition engine driving an electrical generator was passed through an exhaust pipe of conventional size discharging as an injector nozzle into a larger pipe and inducting air through the opening between the discharge nozzle and the outer pipe. The exhaust gases with entrained air were passed to a conventional Briggs and Stratton muffler which had been modified by the addition of a coating of a platinum catalyst to the internal baffle plate surfaces to ignite and stabilize thermal reactions in the muffler and by addition of fixed swirler vanes opposite the muffler inlet. Reacted effluent from the muffler was passed through a second nozzle into a venturi duct to entrain additional air to dilute and cool the effluent. Thermal reaction of the fuel values in the exhaust gases with the oxygen in the inducted air resulted in a muffler exhaust temperature at the muffler exit of 923 degrees Kelvin, or about 200 degrees Kelvin higher than the 718 degrees Kelvin exhaust temperature of a noncatalytic muffler at the same operating conditions. The diluted exhaust was reduced from 923 degrees Kelvin to 713 degrees Kelvin or slightly lower than the exhaust temperature for the standard muffler at the same engine operating conditions. Integrating the venturi duct into a full surrounding sheet metal muffler heat shield through which engine cooling air is ducted resulted in external surface temperatures below 550 degrees Kelvin and an exhaust gas temperature below 610 degrees Kelvin, i.e. much lower than that of the standard non-catalytic muffler. Thus, not only were emissions controlled with a simple system but exhaust and surface temperatures were below those for an engine without emissions control.

## Claims

1. An emissions control system for the exhaust of an internal combustion engine (1), the system comprising:
a reaction chamber (5) for oxidation of exhaust gas fuel values contained in said exhaust from said engine (1), said reaction chamber comprising a catalyst to stabilize termal combustion,
passive air induction means (2, 11) utilizing exhaust flow energy for induction of air into the exhaust gas entering the system,
duct means (3) for transferring said exhaust gas together with said inducted air into said reaction chamber (5), and
cooling and flame arrestor means (6, 7; 14) at the outlet of the system,
**characterized** in
that said reaction chamber (5) is designed to operate at a temperature in excess of 800 degrees Kelvin and includes heat insulation means (17) to reduce external surface temperature,
that cooling means separate from flame arrestor means (14) at the outlet of the system comprise second passive air induction means (6, 7) utilizing reaction chamber effluent flow energy for induction of air into the reaction chamber effluent to lower the temperature of said effluent by at least 200 degrees Kelvin, and
that additional flame arrestor means (13, 16) are provided at the air intake of either said first and said second air induction means (2, 11; 6, 12).

2. The system of claim 1 wherein said reaction chamber (5) comprises recirculation inducing means for inducing recirculation of the gases flowing through said reaction chamber, said recirculation inducing means preferably comprising a swirler (9) and/or a baffle plate (10).

3. The system of claim 2 wherein said catalyst is formed by catalytic surfaces of said swirler (9) and/or said baffle plate (10) substantially spaced from the walls of said reaction chamber (5).

4. The system of any one of the preceding claims wherein said second air induction means (6, 7) comprise a venturi duct (7) into which said reaction chamber effluent flow is directed by a nozzle (6).

5. The system of any one of the preceding claims wherein said second air induction means (6, 7), same as the reaction chamber (5), include heat insulation means (17) to reduce external surface temperature.

6. The system of any one of the preceding claims wherein said heat insulation means (17), at least in part, consist of a double-walled heat shield.

7. The system of any one of the preceding claims wherein at least said reaction chamber (5) is integrated into a muffler of said engine (1).

8. The system of claim 7 wherein engine cooling air is conducted through said muffler.

9. The system of any one of the preceding claims wherein the hot gases of either the engine exhaust and the reaction chamber effluent are prevented from impinging any external walls of the system.

## Patentansprüche

1. Emissionsbegrenzungssystem für das Abgas eines Verbrennungsmotors (1), wobei das System umfaßt:
eine Reaktionskammer (5) zur Oxidation von Abgaskraftstoffwerten, die im Abgas des Motors (1) enthalten sind, wobei die Reaktionskammer zum Stabilisieren der thermischen Verbrennung einen Katalysator aufweist,
passive Luftinduktionsmittel (2, 11), die die Abgasfließenergie zum Induzieren von Luft in das in das System eintretende Abgas verwenden,
Duktmittel (3) zum Überleiten des Abgases zusammen mit der induzierten Luft in die Reaktionskammer (5), und
Abkühlen und Abflammen der Sperrmittel (6, 7; 14) am Auslaß des Systems,
**dadurch gekennzeichnet,**
daß die Reaktionskammer (5) so gestaltet ist, daß sie bei einer Temperatur über 800 Grad Kelvin wirkt und Wärmeisolationsmittel (17) aufweist, um die Temperatur der äußeren Oberfläche zu verringern,
daß von den Flammensperrmittel (14) getrennte Kühlmittel am Auslaß des Systems zweite passive Luftinduktionsmittel (6, 7) aufweisen, die die Reaktionskammerausstoßfließenergie zur Induktion von Luft in den Reaktionskammerausstoß verwenden, um die Temperatur des Abgases um mindestens 200 Grad Kelvin zu erniedrigen, und
daß zusätzliche Flammensperrmittel (13, 16) am Ansaugstutzen des ersten und zweiten Luftinduktionsmittel (2, 11; 6, 12) vorgesehen sind.

2. System nach Anspruch 1, wobei die Reaktionskammer (5) Rückführung-induzierende Mittel aufweist, um die Rückführung der durch die Reaktionskammer fließenden Gase zu induzieren, wobei die die Rückführung induzierenden Mittel bevorzugt einen Verwirbler (9) oder/und eine Stauscheibe (10) aufweisen.

3. System nach Anspruch 2, wobei der Katalysator als katalytische Oberflächen des Verwirblers (9) gebildet ist oder/und die Stauscheibe (10) im wesentlichen mit Abstand zu den Wänden der Reaktionskammer (5) angeordnet ist.

4. System nach einem der vorangehenden Ansprüche, wobei die zweiten Luftinduktionsmittel (6, 7) ein Venturidukt (7) aufweisen, in welches der Reaktionskammerausstoßfluß mittels einer Düse (6) geführt wird.

5. System nach einem der vorangehenden Ansprüche, wobei die zweiten Luftinduktionsmittel (6, 7), genauso wie die Reaktionskammer (5) Wärmeisolationsmittel (17) aufweisen, um die Temperatur der äußeren Oberfläche zu verringern.

6. System nach einem der vorangehenden Ansprüche, wobei die Wärmeisolationsmittel (17) zumindest teilweise aus einer doppelwandigen Wärmeabschirmung bestehen.

7. System nach einem der vorangehenden Ansprüche, wobei zumindest die Reaktionskammer (5) in einem Schalldämpfer des Motors (1) integriert ist.

8. System nach Anspruch 7, wobei die Motorkühlluft durch den Schalldämpfer geführt wird.

9. System nach einem der vorangehenden Ansprüche, wobei die heißen Gase der Motorabgase und des Reaktionskammerausstoßes daran gehindert werden auf irgendeine Außenwand des Systems aufzutreffen.

## Revendications

1. Système de contrôle des émissions pour l'échappement d'un moteur (1) à combustion interne, le système comprenant :
une chambre de réaction (5) pour l'oxydation des restes de combustible gazeux d'échappement contenus dans l'échappement dudit moteur (1), ladite chambre de réaction comprenant un catalyseur pour stabiliser la combustion thermique,
des moyens (2, 11) passifs d'admission d'air utilisant l'énergie d'écoulement de l'échappement pour l'admission de l'air dans le gaz d'échappement entrant dans le système,
des moyens (3) à conduit pour transférer ledit gaz d'échappement, ensemble avec l'air admis, dans ladite chambre de réaction (5), et
des moyens (6, 7 ; 14) de refroidissement et d'arrêt de flamme à la sortie du système,
caractérisé en ce
que ladite chambre de réaction (5) est agencée pour fonctionner à une température dépassant 800 degrés Kelvin et comprend des moyens (17) d'isolation de la chaleur pour réduire la température de la surface externe,
que des moyens de refroidissement, distincts des moyens (14) d'arrêt de flamme à la sortie du système, comprennent des seconds moyens (6, 7) passifs d'admission d'air utilisant l'énergie d'écoulement des effluents de la chambre de réaction pour l'admission d'air dans l'effluent de la chambre de réaction, afin d'abaisser la température dudit effluent d'au moins 200 degrés Kelvin, et
que des moyens (13, 16) additionnels d'arrêt de flamme sont fournis à l'entrée d'air, soit du premier, soit du second moyen d'admission d'air (22, 11 ; 6, 12).

2. Système selon la revendication 1, dans lequel ladite chambre de réaction (5) comprend des moyens d'amorçage de recirculation pour amorcer la recirculation des gaz s'écoulant à travers ladite chambre de réaction, lesdits moyens d'amorçage de recirculation comprenant de préférence un organe de brassage (9) et/ou une plaque-chicane (10).

3. Système selon la revendication 2, dans lequel ledit catalyseur est formé par des surfaces catalytiques dudit organe de brassage (9) et/ou de ladite plaque-chicane (10) disposées sensiblement à distance des parois de ladite chambre de réaction (5).

4. Système selon l'une quelconque des revendications précédentes, dans lequel lesdits seconds moyens (6, 7) d'admission d'air comprennent un conduit Venturi (7) vers lequel ledit écoulement d'effluent de la chambre de réaction est dirigé par un ajutage (6).

5. Système selon l'une quelconque des revendications précédentes, dans lequel lesdits seconds moyens (6, 7) d'admission d'air comprennent, comme la chambre de réaction (5), des moyens (17) d'isolation de la chaleur pour réduire la température de la surface extérieure.

6. Système selon l'une quelconque des revendications précédentes, dans lequel lesdits moyens (17) d'isolation de la chaleur consistent, au moins en partie, d'un écran à chaleur à double paroi.

7. Système selon l'une quelconque des revendications précédentes, dans lequel au moins ladite chambre (5) de réaction est intégrée dans un pot d'échappement (1) dudit moteur (1).

8. Système selon la revendication 7, caractérisé en ce que l'air de refroidissement du moteur est dirigé à travers ledit pot d'échappement.

9. Système selon l'une quelconque des revendications précédentes, dans lequel les gaz chauds de l'échappement du moteur ou de l'effluent de la chambre de réaction sont empêchés d'entrer en contact avec l'une quelconque des parois externes du système.
